# FASCICULE DE BREVET EUROPEEN

(11) **EP 0 795 520 B1**
(45) Date de publication et mention de la délivrance du brevet: **22.09.1999**
(21) Numéro de dépôt: 97400406.1
(22) Date de dépôt: 24.02.1997
(51) Int. Cl.: C03B 37/027, C03B 37/07

(54) **Procédé et dispositif de régulation d'une tour de fibrage de fibre optique tenant compte d'une mesure de la tension de la fibre nue**
Verfahren und Vorrichtung zur Regelung des optischen Faserziehturmes unter Berücksichtigung der an der unbeschichteten Faser gemessenen Zugspannung
Process and apparatus for controlling an optical fibre draw tower taking account of the tension measured from the bare fibre

(30) Priorité: 13.03.1996 FR 9603153
(43) Date de publication de la demande: 17.09.1997
(73) Titulaire: ALCATEL, 75008 Paris (FR)
(72) Inventeur: Michaud, Henri-Marc, 95550 Bessancourt (FR); Auvray, Thierry, Hickory, 28601 NC (US)
(74) Mandataire: Feray, Valérie

(56) Documents cités:
- PATENT ABSTRACTS OF JAPAN vol. 10, no. 136 (C-347), 20 Mai 1986 & JP 60 260440 A (NT&T CORP.), 23 Décembre 1985,
- PATENT ABSTRACTS OF JAPAN vol. 13, no. 190 (C-593), 8 Mai 1989 & JP 01 018933 A (SUMITOMO ELECTRIC IND. LTD.), 23 Janvier 1989,
- PATENT ABSTRACTS OF JAPAN vol. 17, no. 157 (P-1511), 26 Mars 1993 & JP 04 323528 A (FUJIKURA LTD.), 12 Novembre 1992,

## Description

Le domaine de l'invention est celui de la fabrication des fibres optiques. Plus précisément, l'invention concerne le contrôle et le pilotage d'une tour de fibrage de fibres optiques.

De façon générale, la fabrication d'une fibre optique s'effectue en deux temps. On obtient tout d'abord une préforme, qui se présente globalement sous l'aspect d'un cylindre de verre de, par exemple, 1m de haut pour 7 cm de diamètre. La préforme se termine par une queue de préférence, de diamètre réduit (3 cm par exemple).

Ensuite, la préforme est "filée", pour obtenir une fibre, dont le diamètre est en général 125µm. Pour cela, la préforme est placée dans un four de fibrage, dont la température est telle que le verre "coule" sous son propre poids, sous la forme d'une fibre.

La vitesse de descente de la préforme est de l'ordre de quelques millimètres par minute. La fibre produite est entraînée par un cabestan, à une vitesse de quelques dizaines ou quelques centaines de mètres par minute. Cette dernière vitesse conditionne bien sûr le diamètre final de la fibre, via la régulation.

Afin de la protéger des agressions de l'environnement, on recouvre la fibre d'un revêtement plastique, généralement constitué d'une résine polymérisable.

Le coût de la production des fibres optiques étant très élevé, il est particulièrement important que la tour de fibrage soit contrôlée et pilotée de la façon la plus précise possible.

Notamment, le diamètre de la fibre doit être respecté (la tolérance est généralement de ± 1µm). La régulation principale consiste donc à jouer sur la vitesse du cabestan, pour maintenir constant le diamètre de la fibre. Les régulations consistent en particulier à imprimer une vitesse de descente adéquate à la préforme et le four de fibrage doit maintenir la partie de la préforme qu'il contient dans l'état de viscosité idoine.

Les solutions techniques connues consistent à :
- agir sur la puissance du four, pour réguler la tension de la fibre gainée. Cette tension est mesurée par exemple par un jeu de roulettes venant en contact avec la fibre, après qu'elle ait été recouverte de son revêtement ;
- agir sur la vitesse de descente de la préforme, pour réguler la vitesse de fibrage.

Ces solutions ne sont pas satisfaisantes, car le temps de réponse du four ne permet pas une régulation efficace de la tension de fibrage, qui est le facteur le plus important.

Notamment, en fin de fibrage, la masse de préforme (la queue de préforme) présente dans le four diminuant, il apparaît une surchauffe de la préforme, à puissance de chauffe égale. Dans cette situation, la vitesse de fibrage augmente et le régulateur de vitesse diminue la vitesse de descente de la préforme. Cela a pour effet d'augmenter la surchauffe. En conséquence, le système diverge. La seule solution consiste donc, en fin de traitement, à reprendre le contrôle manuel.

Plus généralement, ces techniques sont insuffisamment précises et fiables, et la présence d'un opérateur en permanence devant la machine est nécessaire pour vérifier le bon déroulement des opérations.

On connaît par ailleurs le document JP-A-60 260 440 qui divulgue de régler la vitesse de descente de la préforme dans le four de fibrage, à partir de la différence entre la tension de la fibre mesurée lors de son bobinage et des valeurs prédéterminées de tension d'étirage. Le détecteur de tension de la fibre est incorporé dans le dispositif de bobinage.

Enfin, on connaît le document JP-A-01 018 933 qui divulgue de mesurer la tension d'étirage d'une fibre optique, sans contact avec la fibre, entre le four d'étirage et un applicateur de revêtement sur la fibre et d'ajuster les conditions d'étirage pour que la tension d'étirage reste constante.

L'invention a notamment pour objectif de pallier ces inconvénients de l'état de la technique.

Plus précisément, un objectif de l'invention est de fournir un procédé de régulation d'une tour de fibrage, permettant de fibrer l'ensemble d'une préforme dans le respect des spécifications fixées. Notamment, l'invention a pour objectif de supprimer les problèmes se posant lors du traitement de la queue de préforme.

Un autre objectif de l'invention est de fournir un tel procédé, qui permette d'éviter la nécessité de la prise de contrôle manuel, en particulier en fin de fibrage.

En d'autres termes, l'invention a pour objectif de fournir un procédé de régulation ne nécessitant pas la présence en permanence d'un opérateur devant la machine.

Encore un autre objectif de l'invention est de fournir un tel procédé, qui puisse être utilisé sur tout type de tour de fibrage, et le cas échéant être adapté à des tours existantes.

Ces objectifs, ainsi que d'autres qui apparaîtront par la suite, sont atteints selon l'invention à l'aide d'un procédé de régulation d'une tour de fibrage de fibre optique, comprenant un four de fibrage dans lequel est introduite une préforme à une vitesse de descente réglable, procédé selon lequel on tient compte d'une mesure de la tension de la fibre nue pour contrôler ladite vitesse de descente de la préforme.

En d'autres termes, l'invention propose une approche tout à fait nouvelle de la régulation des tours de fibrage. En effet, au lieu de tenir compte de la tension de la fibre gainée, on tient compte de la tension de la fibre nue.

Classiquement, ledit procédé comprend une phase de démarrage et une phase de production. Dans ce cas, il comprend avantageusement :
- une étape de mesure de la tension de la fibre nue, en sortie dudit four de fibrage ; et
- en phase de production, une étape de régulation de ladite vitesse de descente de la préforme, en fonction de ladite tension de la fibre nue. Préférentiellement, le procédé de l'invention comprend de plus les étapes suivantes :
- une étape de mesure de la vitesse de fibrage ; et
- en phase de production, une étape de régulation de la puissance dudit four de fibrage, en fonction de ladite vitesse de fibrage.

Ainsi, les régulations sont "inversées", par rapport à l'art antérieur connu qui préconise de tenir compte de la tension de la fibre gainée pour réguler la puissance du four et de la vitesse de fibrage pour réguler la vitesse de descente de la préforme.

Cette approche va clairement à l'encontre de la démarche évidente et naturelle de l'homme du métier, et des données de base de la physique du domaine, pour fournir un procédé qui se révèle, de façon surprenante, très efficace pour le traitement de la queue de préforme, mais également pour toute la préforme.

Par ailleurs, en phase de démarrage, le procédé de l'invention comprend de façon avantageuse une étape de régulation de ladite vitesse de descente de la préforme, en fonction de la tension de la fibre nue et de la vitesse de fibrage.

Préférentiellement, ladite mesure de la tension de la fibre nue peut être également utilisée pour réguler la puissance dudit four.

Selon un mode de réalisation particulier de l'invention, les régulations répondent au choix suivant, lors de la phase de démarrage :
[(C∪D)∩(A∪B)]∪[(C∪D)∩E] où :
A correspond à une rampe de montée pilotant la puissance du four en fonction de la tension de la fibre nue ;
B correspond à une montée manuelle pilotant la puissance du four en fonction de la tension de la fibre nue ;
C correspond à une rampe de montée pilotant la vitesse de descente de la préforme en fonction de la vitesse de fibrage ;
D correspond à une montée manuelle pilotant la vitesse de descente de la préforme en fonction de la vitesse de fibrage ;
E correspond à une régulation de la vitesse de descente de la préforme en fonction de la tension de la fibre nue.

L'homme du métier considère généralement qu'aucune opération ne peut être effectuée sur la fibre nue, du fait des risques de détérioration. L'invention montre qu'il est malgré possible de le faire, notamment en utilisant des techniques sans contact.

Ainsi, notamment, ladite étape de mesure de la tension nue comprend une étape de détection et d'analyse des vibrations affectant la fibre.

De façon avantageuse, ladite étape de détection et d'analyse peut comprendre les étapes suivantes :
- mesure optique des mouvements affectant la fibre optique, délivrant un signal de vibration ;
- transformation de Fourier dudit signal de vibration, délivrant une information représentative de la tension de la fibre nue.

De façon avantageuse, le procédé de l'invention comprend une étape de filtrage du premier ordre sur l'information représentative de la tension de la fibre nue et/ou sur l'information représentative de la vitesse de fibrage.

Les régulations affectant le four et la vitesse de descente de la préforme étant des régulations secondaires, par rapport à la régulation principale portant sur le diamètre de la fibre (par action sur la vitesse du cabestan), il est en effet souhaitable quelles soient relativement lentes. Les filtres du premier ordre jouent ainsi rôle de moyennage (associé à une comparaison avec une consigne).

Par ailleurs, ce procédé de régulation prévoit préférentiellement une étape d'application d'un gradient sur l'information représentative de la tension de la fibre nue et/ou sur l'information représentative de la vitesse de fibrage.

Ce gradient permet de supprimer les effets intempestifs des trop fortes variations (phénomènes de "spikes" notamment) affectant les mesures.

L'invention concerne également les dispositifs mettant en oeuvre le procédé décrit ci-dessus. Un tel dispositif comprend notamment des moyens de mesure de la tension de la fibre nue et des moyens de régulation de ladite vitesse de descente de la préforme, en fonction de ladite mesure de la tension de la fibre nue.

D'autres caractéristiques et avantages de l'invention apparaîtront à la lecture de la description suivante d'un mode de réalisation préférentiel, donné à titre de simple exemple illustratif et non limitatif, et des dessins annexés parmi lesquels :
- la figure 1 illustre de façon schématique une tour de fibrage, de type connu en soi, équipé de moyens de régulation selon l'invention ;
- les figures 2A et 2B présentent les régulations d'une tour de fibrage mises en oeuvre selon l'art antérieur, respectivement en phase de démarrage et en phase de production ;
- les figures 3A et 3B présentent les régulations d'une tour de fibrage mises en oeuvre selon l'invention, par exemple sur la tour de la figure 1, respectivement en phase de démarrage et en phase de production.

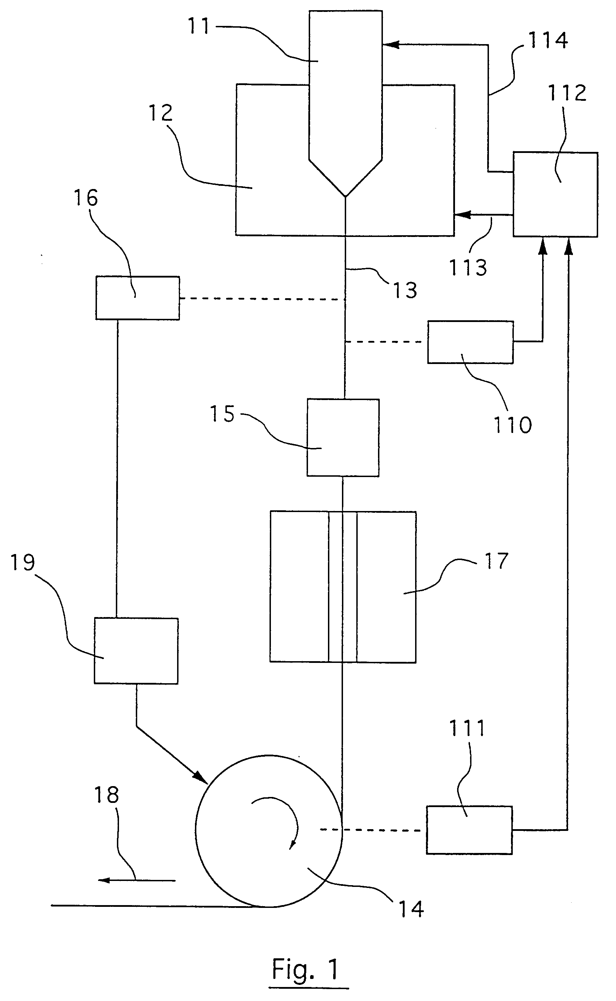

Avant de décrire plus précisément le procédé, on rappelle rapidement les principes de fabrication de telles fibres, en relation avec la figure 1.

La production d'une fibre optique s'effectue en deux phases : on élabore tout d'abord une préforme, ou forme condensée de la fibre, qui se présente sous la forme d'un cylindre d'un diamètre compris, par exemple, entre 14 et 70 mm, pour une longueur de 60 à 100 cm. Une telle préforme permet la fabrication de 6 à 300 km de fibre.

L'opération de fibrage proprement dite est obtenue par étirage de la préforme. La préforme 11 est introduite dans un four de fibrage 12, dont la température est en général de l'ordre de 2 000°C, en fonction de la nature et de la quantité des dopants. La préforme devient visqueuse, de façon qu'elle "coule" sous son propre poids. On obtient alors une fibre 13 (en général de 125 µm de diamètre).

La vitesse de descente de la préforme 11 est de l'ordre de quelques millimètres par minute. La fibre 13 est entraînée par un cabestan 14, à une vitesse de quelques dizaines à au moins plusieurs centaines de mètres par minute.

Afin de protéger la fibre des agressions de l'environnement, il est nécessaire de la recouvrir d'un revêtement plastique, généralement constitué d'une résine polymérisable. La résine est appliquée, sous une forme liquide, sur la fibre 13 après la sortie du four de fibrage 12, à l'aide d'une filière d'enduction 15. Le revêtement est en général composé de deux couches facilement polymérisables, par exemple à base d'époxy-acrylate ou d'uréthanne-acrylate. La couche intérieure présente une dureté plus faible, afin de limiter les pertes par microcourbures.

Ensuite, la fibre passe dans un four de séchage et de polymérisation 17, qui active la polymérisation par énergie thermique et/ou rayonnement ultraviolet, afin que le revêtement soit solidifié avant que la fibre n'atteigne le cabestan 14.

Enfin, la fibre est dirigée (18) vers un tambour de stockage.

Il apparaît clairement que le fibrage est complexe et délicat. La précision nécessaire à la fabrication de la fibre impose la mise en oeuvre de plusieurs régulations.

La régulation principale, classique, consiste à contrôler le diamètre de la fibre, de façon qu'il reste voisin de 125µm. Pour cela, des moyens 16 de mesure du diamètre informent des moyens 19 de régulation de la vitesse du cabestan 14. Cette régulation principale est effectuée de façon très rapide, le diamètre de la fibre étant la caractéristique essentielle du produit.

Les régulations secondaires, objet de la présente invention, sont effectuées de façon beaucoup plus lente, de façon à éviter toute interférence avec les variations de la vitesse de fibrage. Elles font donc l'objet d'une moyenne, par exemple sur une période de 5mn. Ces régulations secondaires ont pour but d'optimiser la fusion de la préforme, en contrôlant la puissance du four 12 et la vitesse de descente de la préforme 11 dans ce four.

Le fibrage peut se décomposer en deux phases dans le temps :
- une phase de démarrage, pendant laquelle la vitesse de fibrage évolue de 0 vers sa vitesse nominale (par exemple 750m/mn) ;
- une phase de production, lorsque la vitesse nominale est atteinte et que l'ensemble des spécifications sont atteintes.

Ces spécifications peuvent correspondre notamment, et par exemple, aux valeurs suivantes :
- diamètre de la fibre nue : 125±1µm ;
- diamètre de la fibre gainée : 245±7µm ;
- tension de la fibre nue : ≈80g
- vitesse de fibrage : 750±10m/mn.

La phase de démarrage dure à peu près 30% du temps de fibrage et correspond à de 2 à 10 % de la longueur totale de la fibre.

De façon connue, les régulations secondaires sont différentes selon la phase.

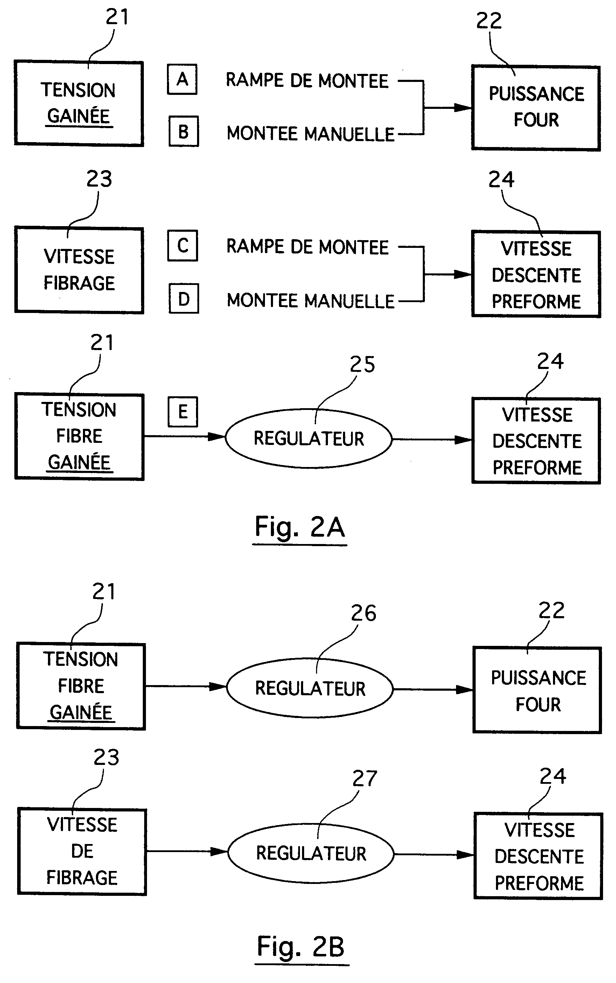

Les figures 2A et 2B décrivent la façon dont on effectue ces opérations selon l'art antérieur.

La figure 2A présente les régulations en phase de démarrage. On peut tenir compte :
- d'une mesure 21 de la tension de la fibre gainée, que l'on utilise pour agir sur la puissance du four 22, soit :
   - A : à partir d'une rampe de montée ;
   - B : à partir d'une montée manuelle ;
- d'une mesure 23 de la vitesse de fibrage, que l'on utilise pour agir sur la vitesse de descente de la préforme 24, soit :
   - C : à partir d'une rampe de montée ;
   - D : à partir d'une montée manuelle ;
- de la mesure 21 de la tension de la fibre gainée (E), que l'on régule (25) en agissant sur la vitesse de descente de la préforme 24.

Les choix process sont alors les suivants :
[(C∪D)∩(A∪B)]∪[(C∪D)∩E]

La mesure 21 de la tension de la fibre gainée est obtenue classiquement à l'aide d'un jeu de roulettes venant en contact avec la fibre gainée, en sortie du four de polymérisation 17.

La mesure de la vitesse de fibrage 23 est par exemple déduite de la vitesse de rotation du cabestan 14.

Lorsque l'on entre en phase de production, les régulations sont modifiées, selon le schéma présenté en figure 2B. On utilise toujours les mesures 21 de la tension de la fibre gainée et 23 de la vitesse de fibrage, pour respectivement :
- réguler (26) la puissance 22 du four;
- réguler (27) la vitesse de descente de la préforme 24.

Comme déjà indiqué en préambule, cette technique présente de nombreux inconvénients et imprécisions, notamment en fin de production, pour le traitement de la queue de préforme. En effet, le système diverge, du fait d'un surchauffe du four, la masse de préforme diminuant. L'opérateur est donc obligé d'assurer un contrôle manuel en fin de fibrage.

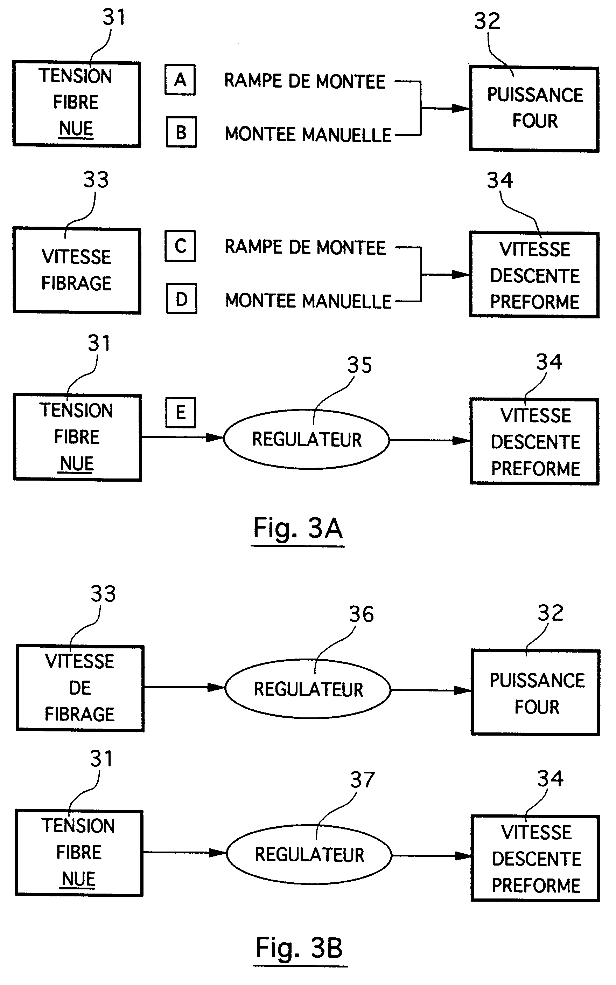

Les nouvelles régulations de l'invention permettent d'éviter ces problèmes. Elles sont illustrées en figures 3A et 3B.

En phase de démarrage, on peut tenir compte :
- d'une mesure 31 de la tension de la fibre nue, que l'on utilise pour agir sur la puissance du four 32, soit :
   - A : à partir d'une rampe de montée ;
   - B : à partir d'une montée manuelle ;
- d'une mesure 33 de la vitesse de fibrage, que l'on utilise pour agir sur la vitesse de descente de la préforme 34, soit :
   - C : à partir d'une rampe de montée ;
   - D : à partir d'une montée manuelle ;
- de la mesure 31 de la tension de la fibre nue (E), que l'on régule (35) en agissant sur la vitesse de descente de la préforme 34.

Les choix process sont alors les suivants :
[(C∪D)∩(A∪B)]∪[(C∪D)∩E]

La différence fondamentale en phase de démarrage, par rapport à l'art antérieur, consiste donc à tenir compte de la tension de la fibre nue, et non plus de la tension de la fibre gainée. Cette solution avantageuse a toujours semblée inexploitable à l'homme du métier, du fait que la mesure de la tension prévoit un contact avec la fibre, qui serait destructif dans le cas de la fibre nue.

La mesure 31 de la tension de la fibre nue est obtenue, selon l'invention par une méthode sans contact, donc non destructive. Avantageusement, il peut s'agir d'une analyse des vibrations de la fibre, par analyse de Fourier.

Le schéma de la figure 3B présente les régulations selon l'invention, lorsque l'on entre en phase de production.

On tient toujours compte des mesures 31 de la tension de la fibre nue et 33 de la vitesse de fibrage. Toutefois, les éléments régulateurs sont inversés, par rapport à l'art antérieur. En effet :
- on utilise la puissance 32 du four pour réguler (36) la vitesse de fibrage (31) ;
- on utilise la vitesse de descente de la préforme 34 pour réguler (27) la tension de la fibre nue (33).

Ces choix vont clairement à l'encontre des règles de base du domaine. Ils s'avèrent toutefois particulièrement efficaces, et permettent d'éviter la présence d'un opérateur en permanence, et même en fin de production.

En résumé, et en référence à la figure 1, l'invention prévoit une mesure 110 de la tension de la fibre nue et une mesure 111 de la vitesse de fibrage, qui alimente une unité 112 de régulation, permettant d'agir sur la puissance du four (113) et sur la vitesse de la descente de la préforme (114), selon les règles illustrées en figures 3A et 3B.

Comme déjà indiqué, les régulations selon l'invention sont des régulations secondaires, par rapport à la régulation du diamètre de la fibre. En conséquence, on applique de façon classique des filtres du premier ordre sur les mesures de la tension de la fibre nue et de la vitesse de fibrage, de façon à obtenir une moyenne par exemple sur une période de quelques minutes, puis on compare cette mesure à une consigne.

Par ailleurs, pour éviter une réaction trop importante lors du passage de "spikes", on applique des gradients sur ces mesures. Cela permet de fixer une limite à l'accélération, et de ne pas tenir compte d'une variation si elle est trop rapide.

## Revendications

1. Procédé de régulation d'une tour de fibrage de fibre optique (13), comprenant un four de fibrage (12) dans lequel est introduite une préforme (11) à une vitesse de descente réglable (114), caractérisé en ce que l'on tient compte d'une mesure (110) de la tension de la fibre nue pour contrôler ladite vitesse (114) de descente de la préforme.

2. Procédé selon la revendication 1, ledit procédé comprenant une phase de démarrage et une phase de production, ainsi qu'une étape (31) de mesure de la tension de la fibre nue, en sortie dudit four de fibrage, et en phase de production, une étape (37) de régulation de ladite vitesse (34) de descente de la préforme, en fonction de ladite tension de la fibre nue.

3. Procédé selon la revendication 2, tel qu'il comprend de plus une étape (33) de mesure de la vitesse de fibrage et en phase de production, une étape (36) de régulation de la puissance (32) dudit four de fibrage, en fonction de ladite vitesse de fibrage.

4. Procédé selon l'une quelconque des revendications 1 à 3, tel que ladite étape (31) de mesure de la tension nue comprend une étape de détection et d'analyse des vibrations affectant la fibre.

5. Procédé selon la revendication 3, tel que ladite étape de détection et d'analyse comprend les étapes suivantes :
- mesure optique des mouvements affectant la fibre optique, délivrant un signal de vibration ;
- transformation de Fourier dudit signal de vibration, délivrant une information représentative de la tension de la fibre nue.

6. Procédé selon l'une quelconque des revendications 1 à 5, tel qu'il comprend une étape de filtrage du premier ordre sur l'information représentative de la tension de la fibre nue et/ou sur l'information représentative de la vitesse de fibrage.

7. Procédé selon l'une quelconque des revendications 1 à 6, tel qu'il comprend une étape d'application d'un gradient sur l'information représentative de la tension de la fibre nue et/ou sur l'information représentative de la vitesse de fibrage.

8. Dispositif de régulation d'une tour de fibrage de fibre optique (13), comprenant un four de fibrage (12) dans lequel est introduite une préforme (11) à une vitesse de descente réglable (114), caractérisé en ce qu'il comprend des moyens de mesure (110) de la tension de la fibre nue et des moyens de régulation (112) de ladite vitesse de descente de la préforme, en fonction de ladite mesure de la tension de la fibre nue.

## Claims

1. A method of controlling on optical fibre (13) drawing machine including a fibre drawing furnace (12) into which a preform (11) is introduced at a controllable rate of descent (114) characterized in that allowance is made for a measured value (110) of the tension in the bare fibre to control said rate (114) of descent of said preform.

2. A method according to claim 1 including a start-up phase and a production phase as well as a step (31) of measuring said tension in said bare fibre at the outlet from said fibre drawing furnace [lacuna] in said production phase, a step (37) of controlling said rate (34) of descent of said preform in accordance with said tension in said bare fibre.

3. A method according to claim 2 further comprising a step (33) of measuring said fibre drawing speed and, in said production phase, a step (36) of controlling the power (32) of said fibre drawing furnace in accordance with said fibre drawing speed.

4. A method according to any one of claims 1 to 3 wherein said step (31) of measuring said tension in said bare fibre includes a step of detecting and analyzing vibrations of said fibre.

5. A method according to claim 3 wherein said detection and analysis step includes the following steps: - optical measurement of movements of the optical fibre, producing a vibration signal; - Fourier transformation of said vibration signal to produce information representative of said tension in said bare fibre.

6. A method according to any one of claims 1 to 5 including a step of first order filtering of said information representing said tension in said bare fibre and/or said information representing said fibre drawing speed.

7. A method according to any one of claims 1 to 6 including a step of application of a gradient to said information representing said tension in said bare fibre and/or to said information representing said fibre drawing speed.

8. A device for controlling an optical fibre (13) drawing machine including a fibre drawing furnace (12) into which a preform (11) is introduced at a controllable rate of descent (114), characterized in that said device includes means (110) for measuring the tension in the bare fibre and means (112) for controlling said rate of descent of said preform in accordance with said measured value of the tension in said bare fibre.

## Patentansprüche

1. Verfahren zum Regeln eines Ziehturms zum Ziehen einer optischen Faser (13), mit einem Ziehofen (12), in den eine Vorform (11) mit einer regelbaren Abwärtsgeschwindigkeit (114) eingeführt wird, dadurch gekennzeichnet, dass eine Messung (110) der Spannung der nackten Faser berücksichtigt wird, um die Abwärtsgeschwindigkeit (114) der Vorform zu steuern.

2. Verfahren nach Anspruch 1, das eine Anlaufphase und eine Produktionsphase sowie einen Schritt (31) des Messens der Spannung der nackten Faser am Ausgang des Ziehturms und in der Produktionsphase einen Schritt (37) des Regelns der Abwärtsgeschwindigkeit (34) der Vorform in Abhängigkeit von der Spannung der nackten Faser umfasst.

3. Verfahren nach Anspruch 2, das ferner einen Schritt (33) des Messens der Ziehgeschwindigkeit und in der Produktionsphase einen Schritt (36) des Regelns der Leistung (32) des Ziehofens in Abhängigkeit von der Ziehgeschwindigkeit umfasst.

4. Verfahren nach einem der Ansprüche 1 bis 3, bei dem der Schritt (31) des Messens der nackten Spannung einen Schritt der Erfassung und Analyse der die Faser betreffenden Schwingungen umfasst.

5. Verfahren nach Anspruch 3, bei dem der Schritt der Erfassung und Analyse die folgenden Schritte umfasst:
- optische Messung der die optische Faser betreffenden Bewegungen, die ein Schwingungssignal liefert;
- Fouriertransformation des Schwingungssignals, die eine für die Spannung der nackten Faser repräsentative Information liefert.

6. Verfahren nach einem beliebigen der Ansprüche 1 bis 5, das einen Schritt der Filterung erster Ordnung der für die Spannung der nackten Faser repräsentativen Information und/oder der für die Ziehgeschwindigkeit repräsentativen Information umfasst.

7. Verfahren nach einem beliebigen der Ansprüche 1 bis 6, das einen Schritt des Anwendens eines Gradienten auf die für die Spannung der nackten Faser repräsentative Information und/oder die für die Ziehgeschwindigkeit repräsentative Information umfasst.

8. Vorrichtung zum Regeln eines Ziehturms zum Ziehen einer optischen Faser (13), mit einem Ziehofen (12), in den eine Vorform (11) mit einer regelbaren Abwärtsgeschwindigkeit (114) eingeführt wird, dadurch gekennzeichnet, dass er Mittel zum Messen (110) der Spannung der nackten Faser und Mittel zum Regeln (112) der Abwärtsgeschwindigkeit der Vorform in Abhängigkeit von der Messung der Spannung der nackten Faser umfasst.
